# EUROPÄISCHE PATENTSCHRIFT

(11) **EP 1 526 025 B1**
(45) Veröffentlichungstag und Bekanntmachung des Hinweises auf die Patenterteilung: **12.10.2011**
(21) Anmeldenummer: 04019335.1
(22) Anmeldetag: 14.08.2004
(51) Int. Cl.: B60K 17/22, F16D 1/06

(54) **Vorrichtung zur Drehmoment übertragenden Verbindung**
Torque transmitting coupling apparatus
Dispositif de transmission de couple par accouplement

(30) Priorität: 24.10.2003 DE 10349652
(43) Veröffentlichungstag der Anmeldung: 27.04.2005
(73) Patentinhaber: AUDI AG, 85045 Ingolstadt (DE)
(72) Erfinder: Märkl, Johann, 85128 Nassenfels (DE); Meixner, Christian, 85049 Dünzlau (DE); Schenker, Mario, 85049 Ingolstadt (DE); Scheffel, Torsten, 85051 Ingolstadt (DE)
(74) Vertreter: Asch, Konrad

(56) Entgegenhaltungen:
- DE-A1- 4 333 644
- DE-A1- 10 034 730

## Beschreibung

Die Erfindung betrifft eine Vorrichtung zur Drehmoment übertragenden Verbindung zwischen einer Kraftabgabewelle und einem Anfahrelement in einem Antriebsaggregat für Kraftfahrzeuge, gemäß dem Oberbegriff des Patentanspruches 1.

Bei gattungsgemäßen Antriebsaggregaten, dies kann sowohl bei Frontantriebsaggregaten als auch bei Allradantriebsaggregaten der Fall sein, ist die Lage der von dem Differenzial abgehenden Abtriebswellen ein wichtiges Kriterium für die Achsgewichtsverteilung des Kraftfahrzeuges. Bei einer seitlichen Anordnung des entsprechenden Differenziales ist in der Regel eine Flanschwelle erforderlich, die den Abstand zu dem weiter entfernten Antriebsrad des Kraftfahrzeuges kompensiert. Dabei ist es z.B. bei frontangetriebenen Kraftfahrzeugen bekannt, die besagte Flanschwelle des Differenziales durch die Ölwanne der Brennkraftmaschine oder hinter dem Anfahrelement - dies kann eine Reibungskupplung oder ein Drehmomentwandler sein - zu verlegen.

Ferner wird darauf verwiesen, dass es bei Antriebsaggregaten in Kraftfahrzeugen mit automatischem Getriebe und einem Drehmomentwandler als Anfahrelement üblich ist, zwischen der Kraftabgabewelle der Brennkraftmaschine und dem Drehmomentwandler einen Mitnehmer aus Stahlblech vorzusehen und den Drehmomentwandler im Getriebe zu lagern. Dabei kann die Verbindung zwischen dem Mitnehmer und dem Drehmomentwandler gemäß DE 43 33 644 A1 mittels Schrauben erfolgen, die in radialer Richtung ausgerichtet sind. Damit kann die Baulänge des Antriebsaggregates verkürzt werden.

Aufgabe der Erfindung ist es, eine Vorrichtung vorzuschlagen, mit der eine Verkürzung der Baulänge des gattungsgemäßen Antriebsaggregates bei günstiger Anordnung und Gewichtsverteilung im Kraftfahrzeug erzielbar ist.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angegeben.

Erfindungsgemäß wird vorgeschlagen, dass das Anfahrelement hinter der Flanschwelle angeordnet und über einen Mitnehmer mit der Kraftabgabewelle verbunden ist. Dies ermöglicht die Anordnung der Flanschwelle unmittelbar hinter der Kraftabgabewelle bzw. Kurbelwelle der Brennkraftmaschine (verkürzte Baulänge) einerseits und des weiteren relativ dicht unterhalb der Drehachse der Kraftabgabewelle, so dass das Antriebsaggregat mit verringerter Bauhöhe in das Kraftfahrzeug einbaubar ist.

Der Mitnehmer kann bevorzugt und fertigungstechnisch günstig durch ein Stahlblech gebildet sein, das mit der Kraftabgabewelle und dem Anfahrelement verbunden, vorzugsweise verschraubt ist.

Besonders vorteilhaft kann die Verschraubungs-Rotationsebene zwischen dem Anfahrelement und dem Mitnehmer hinter der Flanschwelle positioniert sein, wodurch die Flanschwelle unmittelbar an die Kraftabgabewelle anschließen kann. Daraus resultiert eine besonders kurz und robust bauende Konstruktion des Antriebsaggregates, obwohl auch eine Anordnung der Verschraubungs-Rotationsebene vor der Flanschwelle noch bauliche Vorteile bietet.

Der Mitnehmer kann dabei derart ausgebildet sein, dass er, vorzugsweise in zumindest einer definierten Drehstellung, die Flanschwelle, die quer zur Drehachse der Kraftabgabewelle liegt, nicht überdeckt, sondern einen Abstand zur Flanschwelle hat. Damit kann bei der Montage des Geschwindigkeits-Wechselgetriebes mit integriertem Differenzial an der Brennkraftmaschine und bei an der Kraftabgabewelle vormontiertem Mitnehmer die Flanschwelle über den Mitnehmer geschoben und anschließend der Mitnehmer mit dem Anfahrelement verschraubt werden.

Dabei kann der Mitnehmer baulich und fertigungstechnisch günstig im wesentlichen rechteckförmig oder dreieckförmig ausgebildet sein.

Diese Maßnahme kann ggf. dann entfallen, wenn das besagte Differenzial alternativ an der Brennkraftmaschine angeordnet ist.

Des weiteren kann der Mitnehmer im Querschnitt hutförmig gestaltet sein, mit einem im Durchmesser kleineren Abschnitt zur Befestigung an der Kraftabgabewelle, einem im Durchmesser größeren Abschnitt zur Befestigung mit dem Anfahrelement und einem konusförmigen oder zylinderförmigen Verbindungsabschnitt, unter dem die Flanschwelle verläuft. Der Mitnehmer kann dabei rotationssymmetrisch oder für den erforderlichen Freigang an der Flanschwelle bei der Montage des Wechselgetriebes rechteckförmig oder dreieckig gestaltet sein.

Ferner können die Schrauben zur Befestigung des Mitnehmers am Anfahrelement wie an sich bekannt radial ausgerichtet sein, wobei an den Mitnehmer und/oder an das Anfahrelement entsprechende Kragenabschnitte angeformt sind. Eine axiale Ausrichtung der Schrauben ist ebenfalls denkbar.

Besonders zweckmäßig kann das Anfahrelement an seiner der Kraftabgabewelle abgewandten Stirnseite im Gehäuse des Wechselgetriebes zusätzlich über ein Wälzlager gelagert sein. Damit ist das Anfahrelement beiderseits geführt und schwingungsresistent gelagert.

Zwischen dem Mitnehmer und dem Anfahrelement kann zudem eine Lagerebene am Gehäuse des Wechselgetriebes angeordnet sein, mittels dem das Anfahrelement zusätzlich oder alternativ gelagert werden kann.

Das Anfahrelement kann bevorzugt eine Reibungskupplung oder eine nasse Lamellenkupplung (hydrodynamischer Wandler) sein, wobei an dem Gehäuse der Reibungskupplung ein im Querschnitt L-förmiger Stützring befestigt ist, dessen axialer Abschnitt den Innenring des Wälzlagers trägt. Dies ergibt eine baulich kompakte und robuste Konstruktion der Reibungskupplung, die vor der Montage des Antriebsaggregates bereits in dem Wechselgetriebe vormontierbar ist.

Bei einer herkömmlichen hydraulischen Kupplungsbetätigung kann ferner etwa in radialer Überdeckung mit dem Wälzlager und dem Stützring eine vorzugsweise hydraulische Kupplungsbetätigung in das Wechselgetriebe integriert sein. Dem entsprechend liegen die Lagerung der Reibungskupplung und die Kupplungsbetätigung radial übereinander, so dass die Baulänge des Antriebsaggregates weiter verringert ist.

Schließlich kann die Reibungskupplung mit einem an sich bekannten Zweimassen-Schwungrad kombiniert sein, wobei der Mitnehmer mit der Primärmasse und das Gehäuse mit dem Stützring mit der Sekundärmasse des Zweimassen-Schwungrades verbunden ist.

Für eine zusätzliche Zentrierung der Primärmasse an der Kraftabgabewelle kann ein Adapterteil vorgesehen sein, mittels dem die Primärmasse zudem abgestützt werden kann. Das Adapterteil kann dabei durch eine Verlängerung der Kraftabgabewelle oder durch ein zusätzliches mit der Kraftabgabewelle drehschlüssig verbundenes Bauteil gebildet sein. In einer weiteren alternativen Ausführungsform des Adapterteils kann dieses auch als Bestandteil des Mitnehmers ausgeführt sein.

In einer weiteren Ausführungsform kann die Verschraubungs-Rotationsebene zwischen dem Anfahrelement und dem Mitnehmer vor der Flanschwelle positioniert sein. Die Schrauben zur Befestigung des Mitnehmers am Anfahrelement können hierbei radial oder axial ausgerichtet sein. Damit ist eine Ausführungsform geschaffen, die bei speziellen Einbausituationen zum tragen kommen kann.

Ein Ausführungsbeispiel der Erfindung ist im folgenden mit weiteren Einzelheiten näher erläutert. Die schematische Zeichnung zeigt in:
- **Fig. 1**: skizzenhaft ein Antriebsaggregat für ein frontangetriebenes Kraftfahrzeug mit einer Brennkraftmaschine, einem Geschwindigkeits-Wechselgetriebe und einem seitlich angebauten Differenzial mit einer Flanschwelle;
- **Fig. 2**: einen Querschnitt gemäß Linie II - II der Fig. 1 durch das Antriebsaggregat mit Sicht auf den Mitnehmer, das Anfahrelement und die Lage der Flanschwelle;
- **Fig. 3**: einen Längsschnitt entlang der Linie III - III der Fig. 2 durch das Anfahrelement und den Mitnehmer;
- **Fig. 4**: einen Längsschnitt entlang der Linie III - III der Fig. 2 durch das Anfahrelement und den Mitnehmer mit einer dazwischenliegenden Lagerstelle des Anfahrelements, und
- **Fig. 5**: einen Längsschnitt mit Darstellung der Verschraubungs-Rotationsebene vor der Flanschwelle.

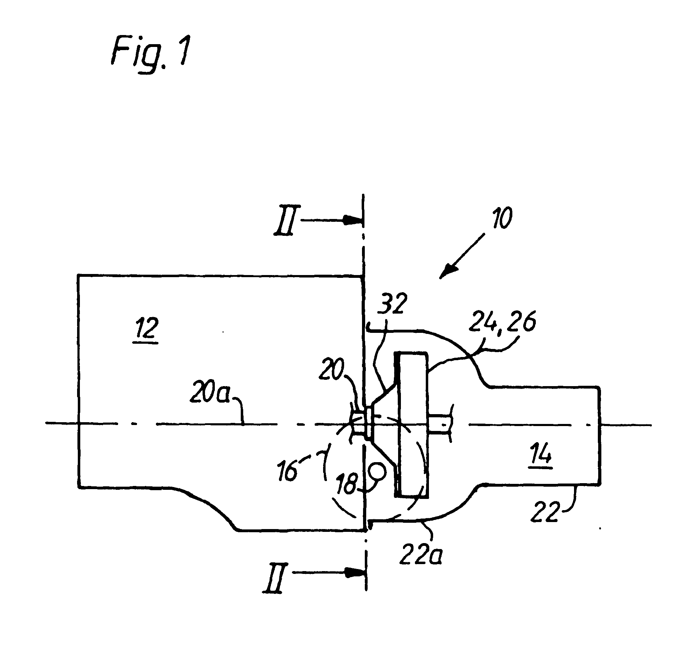

In der **Fig. 1** ist mit 10 ein Antriebsaggregat für frontgetriebene Kraftfahrzeuge bezeichnet, das sich im wesentlichen aus einer Brennkraftmaschine 12, einem nachgeschalteten Geschwindigkeits-Wechselgetriebe 14 und einem seitlich angebauten Vorderachs-Differenzial 16 zusammensetzt. Soweit nicht beschrieben kann das Antriebsaggregat 10 herkömmlicher Bauart sein.

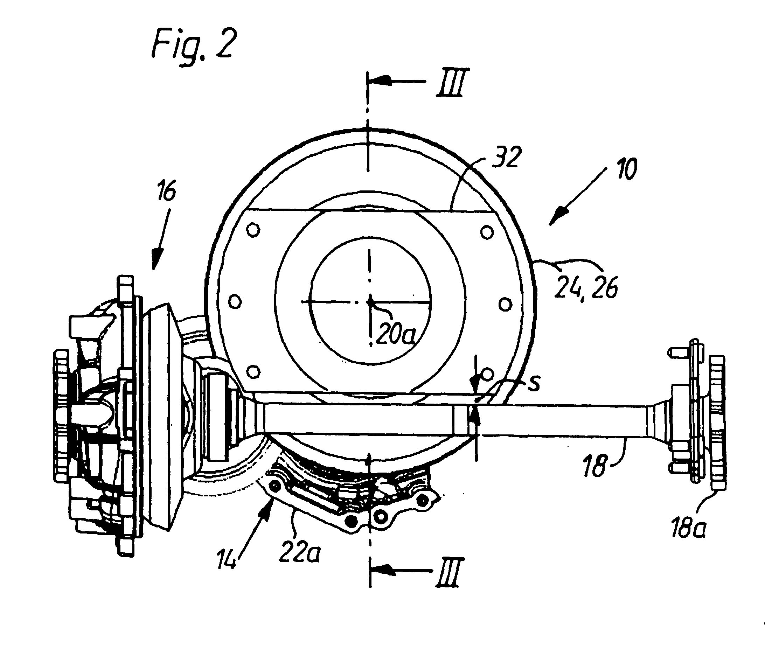

Das Differenzial 16 kann ein herkömmliches Kegelrad-Differenzial sein, dessen Tellerrad von einer Abtriebswelle (nicht dargestellt) des Wechselgetriebes 14 - z.B. einem Schaltgetriebe - angetrieben ist. Von dem Differenzial 16 (vgl. auch Fig. 2) erstreckt sich eine Flanschwelle 18 quer zur Drehachse 20a der nur angedeuteten Kraftabgabewelle bzw. Kurbelwelle 20 der Brennkraftmaschine 12 zur anderen Aggregateseite und endet in einem Anschlussflansch 18a, an den in bekannter Weise eine Antriebswelle zum Antrieb des eines Vorderrades des Kraftfahrzeuges anschließbar ist.

Das Differenzial 16 mit der Flanschwelle 18 ist in nicht dargestellter Weise in das Gehäuse 22 des Wechselgetriebes 14 integriert, wobei die Flanschwelle 18 knapp unterhalb der Drehachse 20a der Kurbelwelle 20 und nahe hinter der durch die Schnittebene II - II in der Fig. 1 definierten Trennebene zwischen Brennkraftmaschine und dem Wechselgetriebe (Flanschebene) positioniert ist.

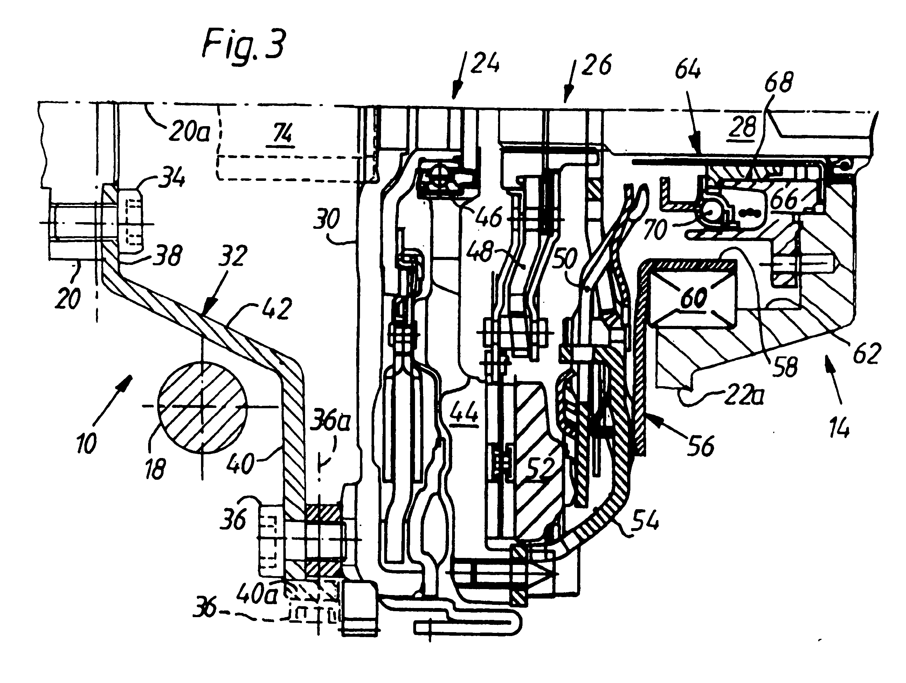

Innerhalb der Kupplungsglocke 22a des Wechselgetriebes 14 (vgl. Fig. 3) ist als Anfahrelement eine mit einem Zweimassen-Schwungrad 24 kombinierte Reibungskupplung 26 drehbar gelagert, die das Drehmoment der Kurbelwelle 20 an deren Kraftabgabeseite auf eine Eingangswelle 28 des Wechselgetriebes 14 überträgt. Soweit im folgenden nicht beschrieben, sind das Zweimassen-Schwungrad 24 (ZMS) und die Reibungskupplung 26 bekannter Bauart. Die Reibungskupplung 26 kann dabei beispielsweise als trockene Einoder Zweischeibenkupplung oder als nasse Mehrscheibenkupplung (Lamellenkupplung) ausgeführt sein. Wie ersichtlich ist, liegt das Anfahrelement 24, 26 hinter der die verlängerte Drehachse 20a der Kurbelwelle 20 kreuzenden Flanschwelle 18.

Dabei ist das ZMS 24 mit seinem Primärteil 30 über einen Mitnehmer 32 aus Stahlblech mit der Kurbelwelle 20 drehfest verbunden. Der Mitnehmer 20 ist mit der Kraftabgabeseite der Kurbelwelle 20 mittels Schrauben 34 und mit dem Primärteil 30 über Schrauben 36 fest verschraubt. Die in der Fig. 3 ersichtliche und in durchgezogenen Linien eingezeichnete Schraube 36 ist achsparallel zur Drehachse 20a bzw. der koaxialen Drehachse der Eingangswelle 28 ausgerichtet.

Die Schrauben 36 können aber unter Berücksichtigung ggf. baulicher Zwänge - wie in gestrichelten Linien angedeutet - radial ausgerichtet sein, so dass die eingezeichnete Verschraubungs-Rotationsebene 36a noch näher an die Flanschwelle 18 positionierbar und ggf. auch die Schraubverbindung des ZMS 24 mit dem Mitnehmer 32 besser zugänglich wäre. Dazu könnten an den radial verlaufenden Abschnitt 40 des Mitnehmers 32 um 90 Grad abgebogene Kragenabschnitte 40a mit entsprechenden Bohrungen angeformt sein, durch die hindurch die Schrauben 36 in entsprechende Gewindebohrungen des Primärteils 30 einschraubbar wären.

Der im Querschnitt etwa hutförmige Mitnehmer 32 setzt sich aus einem radial verlaufenden Abschnitt 38 kleineren Durchmessers, einem radial verlaufenden Abschnitt 40 größeren Durchmessers und einem etwa konisch verlaufenden Verbindungsabschnitt 42 zusammen, wobei die Flanschwelle 18 dicht unterhalb des Verbindungsabschnittes 42 positioniert ist (vgl. Fig. 3).

Ferner ist der Mitnehmer 32 (vgl. **Fig. 2**) in der Draufsicht gesehen rechteckförmig (oder dreieckförmig) ausgeführt und zwar derart, dass er in der gezeichneten Drehstellung mit einer parallel zur Flanschwelle 18 ausgerichteten Längsseite einen geringen Abstand s zur Flanschwelle 18 aufweist. Dadurch kann die mit dem Wechselgetriebe 14 zusammengebaute Flanschwelle 18 bei der Montage des Wechselgetriebes 14 an die Brennkraftmaschine 12 unter den an der Kurbelwelle 20 vormontiertem Mitnehmer 32 vorbei in die Betriebsstellung (Position gemäß **Fig. 3**) geschoben werden.

Das gegenüber dem Primärteil 30 des ZMS 24 in bekannter Weise torsionsgedämpfte und über ein Wälzlager 46 drehgelagerte Sekundärteil bildet zugleich die Schwungscheibe 44 der Reibungskupplung 26, deren Mitnehmerscheibe 48 drehschlüssig mit der Eingangswelle 28 verbunden ist und mit der über eine Tellerfeder 50 anpressbaren Druckplatte 52 zusammenwirkt.

Die Druckplatte 52 und die Tellerfeder 50 sind in dem Gehäuse 54 der Reibungskupplung 26 entsprechend angeordnet, wobei das Gehäuse 54 mit der Schwungscheibe 44 fest verschraubt ist.

An das Gehäuse 54 ist ein im Querschnitt L-förmiger Stützring 56 an seiner der Kurbelwelle 20 abgewandten Stirnseite angeschweißt, dessen radial innenliegender Ringabschnitt 58 den Innenring (nicht dargestellt) eines Wälzlagers 60 (ein Kugellager oder Nadellager) trägt. Der Außenring des Wälzlagers 60 ist in einer Gehäusewand 62 des Gehäuses 22 des Wechselgetriebes 14 aufgenommen, so dass eine zusätzliche Drehlagerung für das Anfahrelement 24, 26 zu dessen Abstützung über den Mitnehmer 32 an der Kurbelwelle 20 geschaffen ist.

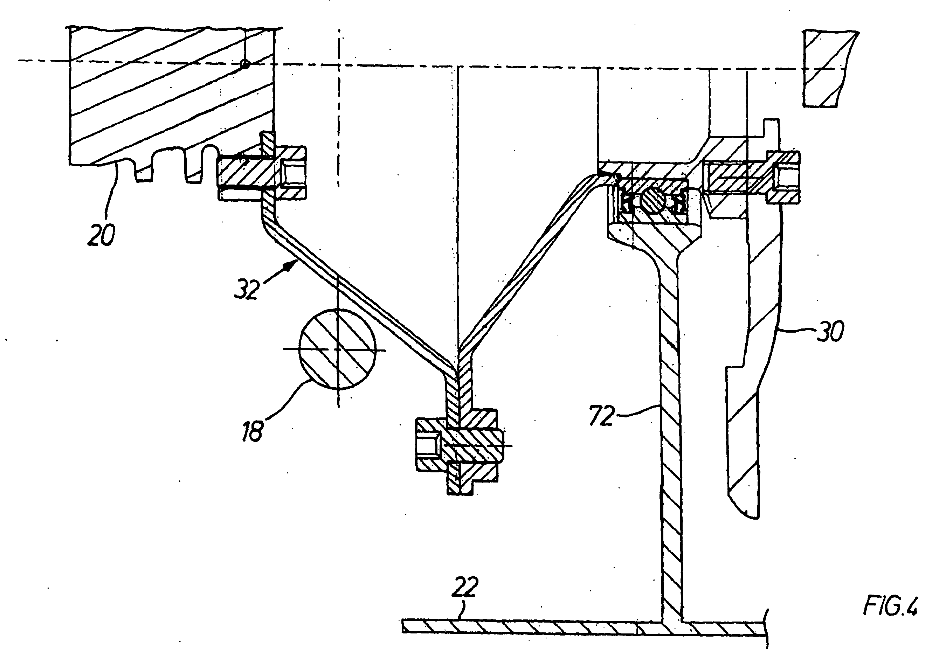

In **Fig. 4** ist ein Teilbereich der Schnittdarstellung von **Fig. 3** in einer weiteren Ausführungsform gezeigt, wobei nur der Bereich zwischen dem Mitnehmer 32 und dem ZMS 24 bzw. der Primärmasse 30 des ZMS 24 gezeigt ist. Dabei ist zu erkennen, dass am Gehäuse 22 ein Lagerstern 72 ausgebildet ist, mittels dem das ZMS 24 und somit das Anfahrelement drehbar gelagert wird. Dadurch ist auch zwischen dem Mitnehmer 32, das hier zweiteilig ausgeführt ist, und dem Anfahrelement eine Lagerung desselben möglich.

Ferner kann das Primärteil 30 an der Kurbelwelle 20 mittenzentriert sein. Dies ist nur schematisch als Adapterteil 74 mit strichlierten Linien in **Fig. 3** eingezeichnet. Das Adapterteil 74 kann dabei durch eine Verlängerung der Kurbelwelle 20 oder durch ein zusätzliches mit der Kurbelwelle 20 drehschlüssig verbundenes Bauteil ausgebildet sein. Denkbar ist auch, dass das Adapterteil 74 Bestandteil des Mitnehmers 32 ist oder als ein entsprechend angeformten Zapfen in einem Führungslager ausgebildet ist.

Innerhalb des Ringabschnittes 58 und in etwa in radialer Überdeckung dazu ist eine hydraulische Kupplungsbetätigung 64 um die Eingangswelle 28 herum vorgesehen, die sich in an sich bekannter Weise aus einem zylindrischen Gehäuse 66, einem Ringkolben 68 und einem Ausrücklager 70 zusammensetzt und über die die Tellerfeder 50 zum Ausrücken der Reibungskupplung 26 entsprechend betätigbar ist.

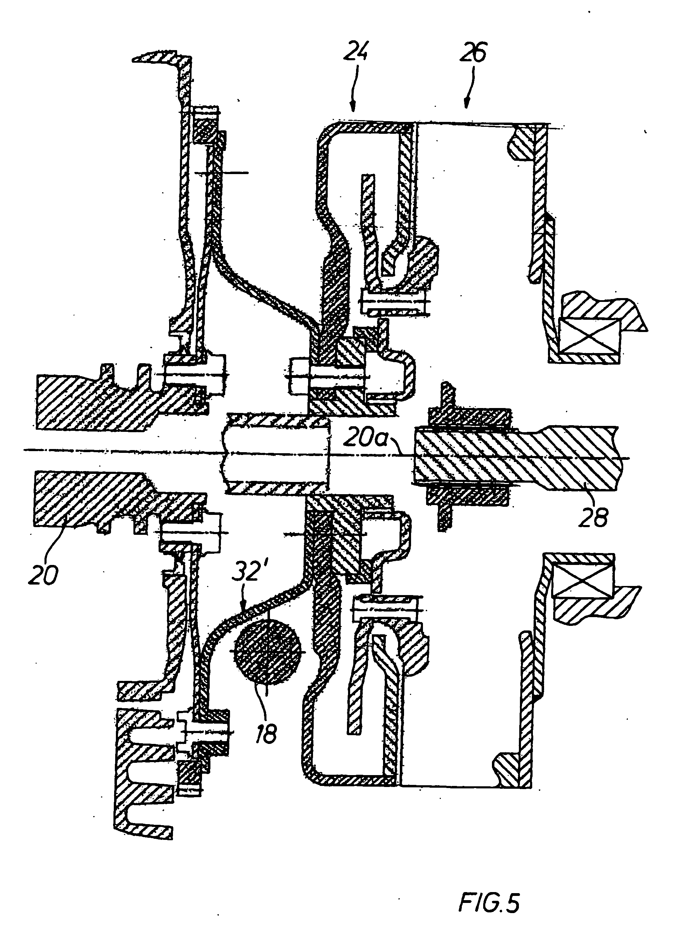

**Fig. 5** zeigt ein Ausführungsbeispiel, welches die Verschraubungs-Rotationsebene von Anfahrelement (24, 26) und Mitnehmer (32') vor der Flanschwelle (18) zeigt. Auch dort können die Schrauben zur Befestigung des Mitnehmers (32') am Anfahrelement (24, 26) in radialer oder axialer Richtung geführt werden.

## Patentansprüche

1. Antriebsaggregat für Kraftfahrzeuge, das sich aus einer Brennkraftmaschine, einem Geschwindigkeits-Wechselgetriebe (14) und einem Antriebsräder des Kraftfahrzeuges antreibenden Differenzial zusammensetzt, wobei das Geschwindigkeits-Wechselgetriebe (A) eine Vorrichtung zur drehmomentübertragenden Verbindung zwischen einer Kraftabgabewelle (20) und einem Anfahrelement (24, 26) aufweist und eine Flanschwelle (18) des seitlich zur Drehachse der Kraftabgabewelle (20) angeordneten Differenziales unterhalb und hinter der Kraftabgabewelle (20) und dessen Drehachse kreuzend verläuft, **dadurch gekennzeichnet, dass** das Anfahrelement (24, 26) hinter der Flanschwelle (18) angeordnet und über einen Mitnehmer (32) mit der Kraftabgabewelle (20) verbunden ist.

2. Vorrichtung nach Anspruch 1, **dadurch gekennzeichnet, dass** der Mitnehmer (32) durch ein Stahlblech gebildet ist, das mit der Kraftabgabewelle (20) und dem Anfahrelement (24, 26) verbunden ist.

3. Vorrichtung nach den Ansprüchen 1 und 2, **dadurch gekennzeichnet, dass** die Verschraubungs-Rotationsebene (36a) zwischen dem Anfahrelement (24, 26) und dem Mitnehmer (32) hinter der Flanschwelle (18) positioniert ist.

4. Vorrichtung nach den Ansprüchen 1 bis 3, **dadurch gekennzeichnet, dass** der Mitnehmer (32) derart ausgebildet ist, dass er die Flanschwelle (18), die quer zur Drehachse (20a) der Kraftabgabewelle (20) liegt, nicht überdeckt, sondern einen Abstand (s) zur Flanschwelle (18) hat.

5. Vorrichtung nach Anspruch 4, **dadurch gekennzeichnet, dass** der Mitnehmer (32) im wesentlichen rechteckförmig oder dreieckförmig ausgebildet ist.

6. Vorrichtung nach einem oder mehreren der Ansprüche 1 bis 5, **dadurch gekennzeichnet, dass** der Mitnehmer (32) im wesentlichen hutförmig gestaltet ist, mit einem im Durchmesser kleineren Abschnitt (38) zur Befestigung mit der Kraftabgabewelle (20), einem im Durchmesser größeren Abschnitt (40) zur Befestigung mit dem Anfahrelement (24, 26) und einem konusförmigen oder zylinderförmigen Verbindungsabschnitt (42), unter dem die Flanschwelle (18) verläuft.

7. Vorrichtung nach einem oder mehreren der vorhergehenden Ansprüche, **dadurch gekennzeichnet, dass** die Schrauben (36) zur Befestigung des Mitnehmers (32) am Anfahrelement (24, 26) radial ausgerichtet sind, wobei an den Mitnehmer (32) und/oder an das Anfahrelement (24, 26) entsprechende Kragenabschnitte (40a) angeformt sind.

8. Vorrichtung nach einem oder mehreren der vorhergehenden Ansprüche, **dadurch gekennzeichnet, dass** die Schrauben (36) zur Befestigung des Mitnehmers (32) am Anfahrelement (24, 26) axial ausgerichtet sind.

9. Vorrichtung nach einem oder mehreren der vorhergehenden Ansprüche, **dadurch gekennzeichnet, dass** das Anfahrelement (24, 26) an seiner der Kraftabgabewelle (20) abgewandten Stirnseite im Gehäuse (22) des Wechselgetriebes (14) zusätzlich über ein Wälzlager (60) gelagert ist.

10. Vorrichtung nach einem oder mehreren der vorhergehenden Ansprüche, **dadurch gekennzeichnet, dass** am Gehäuse (22) des Wechselgetriebes (14) eine Lagerebene (72) zwischen dem Mitnehmer (32) und dem Anfahrelement (24, 26) angeordnet ist, mittels der das Anfahrelement (24, 26) lagerbar ist.

11. Vorrichtung nach einem oder mehreren der vorhergehenden Ansprüche, **dadurch gekennzeichnet, dass** das Anfahrelement eine Reibungskupplung (26) ist und dass an dem Gehäuse (54) der Reibungskupplung (26) ein im Querschnitt L-förmiger Stützring (56) befestigt ist, dessen axialer Ringabschnitt (58) den Innenring eines Wälzlagers (60) trägt.

12. Vorrichtung nach Anspruch 11, **dadurch gekennzeichnet, dass** etwa in radialer Überdeckung mit dem Wälzlager (60) und dem Stützring (56) eine Kupplungsbetätigung (64) in das Wechselgetriebe (14) integriert ist.

13. Vorrichtung nach Anspruch 11 oder 12, **dadurch gekennzeichnet, dass** die Reibungskupplung (26) mit einem Zweimassen-Schwungrad (24) kombiniert ist, wobei der Mitnehmer (32) mit der Primärmasse (30) und das Gehäuse (54) mit dem Stützring (56) mit der Sekundärmasse bzw. dem Schwungrad (44) verbunden ist.

14. Vorrichtung nach Anspruch 13, **dadurch gekennzeichnet, dass** die Primärmasse (30) für eine Zentrierung an der Kraftabgabewelle (20) mit einem Adapterteil (74) abstützbar ist.

15. Vorrichtung nach Anspruch 14, **dadurch gekennzeichnet, dass** das Adapterteil (74) durch eine Verlängerung der Kraftabgabewelle (20) oder durch ein zusätzliches mit der Kraftabgabewelle (20) drehschlüssig verbundenes Bauteil oder als Bestandteil des Mitnehmers (32) ausgebildet ist.

16. Vorrichtung nach Anspruch 1, **dadurch gekennzeichnet, dass** die Verschraubungs-Rotationsebene zwischen dem Anfahrelement (24, 26) und dem Mitnehmer (32') vor der Flanschwelle (18) positioniert ist.

17. Vorrichtung nach Anspruch 16, **dadurch gekennzeichnet, dass** die Schrauben zur Befestigung des Mitnehmers (32') am Anfahrelement (24, 26) radial oder axial ausgerichtet sind.

## Claims

1. Drive assembly for motor vehicles, which drive assembly is composed of an internal combustion engine, a change-speed gearbox (14) and a differential which drives drive wheels of the motor vehicle, the change-speed gearbox (14) having an apparatus for the torque-transmitting connection between a power take-off shaft (20) and a starting element (24, 26), and a flange shaft (18) of the differential which is arranged laterally with respect to the rotational axis of the power take-off shaft (20) extending below and behind the power take-off shaft (20) and so as to cross its rotational axis, **characterized in that** the starting element (24, 26) is arranged behind the flange shaft (18) and is connected via a driver (32) to the power take-off shaft (20).

2. Apparatus according to Claim 1, **characterized in that** the driver (32) is formed by a steel plate which is connected to the power take-off shaft (20) and the starting element (24, 26).

3. Apparatus according to Claims 1 and 2, **characterized in that** the screw-connection rotational plane (36a) between the starting element (24, 26) and the driver (32) is positioned behind the flange shaft (18).

4. Apparatus according to one of Claims 1 to 3, **characterized in that** the driver (32) is configured in such a way that it does not cover the flange shaft (18) which lies transversely with respect to the rotational axis (20a) of the power take-off shaft (20), but rather is at a spacing (s) from the flange shaft (18).

5. Apparatus according to Claim 4, **characterized in that** the driver (32) is of substantially rectangular or triangular configuration.

6. Apparatus according to one or more of Claims 1 to 5, **characterized in that** the driver (32) is of substantially hat-shaped design, having a section (38) of smaller diameter for fastening to the power take-off shaft (20), a section (40) of greater diameter for fastening to the starting element (24, 26), and a conical or cylindrical connecting section (42), under which the flange shaft (18) runs.

7. Apparatus according to one or more of the preceding claims, **characterized in that** the screws (36) for fastening the driver (32) to the starting element (24, 26) are oriented radially, corresponding collar sections (40a) being formed integrally onto the driver (32) and/or onto the starting element (24, 26).

8. Apparatus according to one or more of the preceding claims, **characterized in that** the screws (36) for fastening the driver (32) to the starting element (24, 26) are oriented axially.

9. Apparatus according to one or more of the preceding claims, **characterized in that**, on its end side which faces away from the power take-off shaft (20), the starting element (24, 26) is additionally mounted in the housing (22) of the change-speed gearbox (14) via an anti-friction bearing (60).

10. Apparatus according to one or more of the preceding claims, **characterized in that** a bearing plane (72) between the driver (32) and the starting element (24, 26) is arranged on the housing (22) of the change-speed gearbox (14), by means of which bearing plane (72) the starting element (24, 26) can be mounted.

11. Apparatus according to one or more of the preceding claims, **characterized in that** the starting element is a friction clutch (26), and **in that** a supporting ring (56) of L-shaped cross section is fastened to the housing (54) of the friction clutch (26), the axial ring section (58) of which supporting ring (56) carries the inner ring of an anti-friction bearing (60).

12. Apparatus according to Claim 11, **characterized in that** a clutch actuating means (64) is integrated into the change-speed gearbox (14) approximately in a radial overlap with the anti-friction bearing (60) and the supporting ring (56).

13. Apparatus according to Claim 11 or 12, **characterized in that** the friction clutch (26) is combined with a two-mass flywheel (24), the driver (32) being connected to the primary mass (30) and the housing (54) with the supporting ring (56) being connected to the secondary mass or the flywheel (44).

14. Apparatus according to Claim 13, **characterized in that** the primary mass (30) can be supported for centring on the power take-off shaft (20) with an adapter part (74).

15. Apparatus according to Claim 14, **characterized in that** the adapter part (74) is formed by an extension of the power take-off shaft (20) or by an additional component which is connected fixedly to the power take-off shaft (20) so as to rotate with it, or as a constituent part of the driver (32).

16. Apparatus according to Claim 1, **characterized in that** the screw-connection rotational plane between the starting element (24, 26) and the driver (32') is positioned in front of the flange shaft (18).

17. Apparatus according to Claim 16, **characterized in that** the screws for fastening the driver (32') to the starting element (24, 26) are oriented radially or axially.

## Revendications

1. Groupe motopropulseur pour véhicules automobiles, qui se compose d'un moteur à combustion interne, d'une boîte de vitesse (14) et d'un différentiel entraînant les roues motrices du véhicule automobile, la boîte de vitesse (14) présentant un dispositif pour le transfert de couple par accouplement entre un arbre de prise de force (20) et un élément de démarrage (24, 26), et un arbre à bride (18) du différentiel disposé latéralement à l'axe de rotation de l'arbre de prise de force (20) s'étendant sous et derrière l'arbre de prise de force (20) et croisant son axe de rotation, **caractérisé en ce que** l'élément de démarrage (24, 26) est disposé derrière l'arbre à bride (18) et est connecté par le biais d'un dispositif d'entraînement (32) à l'arbre de prise de force (20).

2. Dispositif selon la revendication 1, **caractérisé en ce que** le dispositif d'entraînement (32) est formé par une tôle d'acier qui est connectée à l'arbre de prise de force (20) et à l'élément de démarrage (24, 26).

3. Dispositif selon les revendications 1 et 2, **caractérisé en ce que** le plan de rotation de vissage (36a) entre l'élément de démarrage (24, 26) et le dispositif d'entraînement (32) est positionné derrière l'arbre à bride (18).

4. Dispositif selon les revendications 1 à 3, **caractérisé en ce que** le dispositif d'entraînement (32) est réalisé de telle sorte qu'il ne recouvre pas l'arbre à bride (18) qui se situe transversalement à l'axe de rotation (20a) de l'arbre de prise de force (20), mais qu'il présente un espacement (s) par rapport à l'arbre à bride (18).

5. Dispositif selon la revendication 4, **caractérisé en ce que** le dispositif d'entraînement (32) est réalisé sensiblement sous forme rectangulaire ou triangulaire.

6. Dispositif selon l'une quelconque ou plusieurs des revendications 1 à 5, **caractérisé en ce que** le dispositif d'entraînement (32) est configuré sensiblement en forme de chapeau, avec une portion (38) de plus petit diamètre pour la fixation à l'arbre de prise de force (20), une portion (40) de plus grand diamètre pour la fixation à l'élément de démarrage (24, 26) et une portion de connexion de forme conique ou cylindrique (42), sous laquelle s'étend l'arbre à bride (18).

7. Dispositif selon l'une quelconque ou plusieurs des revendications précédentes, **caractérisé en ce que** les vis (36) pour la fixation du dispositif d'entraînement (32) sur l'élément de démarrage (24, 26) sont orientées radialement, des portions (40a) de col correspondantes étant façonnées sur le dispositif d'entraînement (32) et/ou sur l'élément de démarrage (24, 26).

8. Dispositif selon l'une quelconque ou plusieurs des revendications précédentes, **caractérisé en ce que** les vis (36) pour la fixation du dispositif d'entraînement (32) sur l'élément de démarrage (24, 26) sont orientées axialement.

9. Dispositif selon l'une quelconque ou plusieurs des revendications précédentes, **caractérisé en ce que** l'élément de démarrage (24, 26) est en outre supporté par le biais d'un palier à roulement (60) sur son côté frontal opposé à l'arbre de prise de force (20) dans le boîtier (22) de la boîte de vitesse (14).

10. Dispositif selon l'une quelconque ou plusieurs des revendications précédentes, **caractérisé en ce qu'**un plan de support (72) est disposé sur le boîtier (22) de la boîte de vitesse (14) entre le dispositif d'entraînement (32) et l'élément de démarrage (24, 26), au moyen duquel l'élément de démarrage (24, 26) peut être supporté.

11. Dispositif selon l'une quelconque ou plusieurs des revendications précédentes, **caractérisé en ce que** l'élément de démarrage est un embrayage à friction (26) et **en ce qu'**une bague de support (56) en forme de L en section transversale est fixée sur le boîtier (54) de l'embrayage à friction (26), sa portion annulaire axiale (58) portant la bague interne d'un palier à roulement (60).

12. Dispositif selon la revendication 11, **caractérisé en ce qu'**une commande d'embrayage (64) est intégrée dans la boîte de vitesse (14) approximativement en chevauchement radial avec le palier à roulement (60) et la bague de support (56).

13. Dispositif selon la revendication 11 ou 12, **caractérisé en ce que** l'embrayage à friction (26) est combiné à une roue volante à deux masses (24), le dispositif d'entraînement (32) étant connecté à la masse primaire (30) et le boîtier (54) avec la bague de support (56) étant connecté à la masse secondaire ou à la roue volante (44).

14. Dispositif selon la revendication 13, **caractérisé en ce que** la masse primaire (30) peut être supportée en vue d'un centrage sur l'arbre de prise de force (20) avec une pièce d'adaptateur (74).

15. Dispositif selon la revendication 14, **caractérisé en ce que** la pièce d'adaptateur (74) est réalisée par un prolongement de l'arbre de prise de force (20) ou par un composant supplémentaire connecté à l'arbre de prise de force (20) sans tourner avec lui, ou sous forme de constituant du dispositif d'entraînement (32).

16. Dispositif selon la revendication 1, **caractérisé en ce que** le plan de rotation de vissage est positionné entre l'élément de démarrage (24, 26) et le dispositif d'entraînement (32') devant l'arbre à bride (18).

17. Dispositif selon la revendication 16, **caractérisé en ce que** les vis pour la fixation du dispositif d'entraînement (32') sont orientées radialement ou axialement sur l'élément de démarrage (24, 26).
